# EUROPEAN PATENT APPLICATION

(11) **EP 1 205 407 A1**
(43) Date of publication of application: **15.05.2002**
(21) Application number: 01906284.3
(22) Date of filing: 23.02.2001
(51) Int. Cl.: B65G 1/137, G06F 17/60

(54) **DATA PROCESSING METHOD FOR COMPONENT SUPPLY MANAGING SYSTEM**

(30) Priority: 25.02.2000 JP 2000054433
(71) Applicant: Rubycon Corporation, Ina-shi, Nagano-ken 399-4593 (JP)
(72) Inventor: TONOUCHI, Hidenori, Ina-shi, Nagano 396-0021 (JP); KOMATSU, Yukio, Komagane-shi, Nagano 399-4101 (JP)
(74) Representative: Rapp, Bertram, Dr.
(86) International application number: JP0101387
(87) International publication number: WO0162633

(57) **Abstract**

The present invention provides a data processing method for a parts supply management system for supplying a volume of parts which is neither excessive nor short by maintaining a close relationship between a user and a supplier. In the data processing method, a supplier side server (10) receives parts utilization forecast information and order information from a user side server (20) via a network (1), stores the parts utilization forecast information and the order information, obtains production arrangement information based on the parts utilization forecast information, obtains stock forecast information based on the parts utilization forecast information or the order information, and obtains supplement information based on the parts utilization forecast information and the stock forecast information.

## Description

### TECHNICAL FIELD

The present invention relates to a data processing method for a. parts supply management system for supplying a required volume of parts at a required timing and without any shortage by closely connecting a corporation (user) who receives supplies of parts and a corporation (supplier) who produces parts. The present invention relates more particularly to a display method of a parts supply management system or a display method or a simulation method for a parts supply management system.

### BACKGROUND ART

A user purchases parts from a plurality of suppliers, assembles the parts so purchased and ships the parts so assembled as final products. Normally, a supplier deals with various types of parts that have various applications, and hence the supplier does not always stock a large volume of parts for each type. However, the supplier is requested by the user to deliver a desired volume of parts of a specific kind within the shortest possible delivery time.

To cope with this, the supplier receives parts utilization forecast information (forecast) from the user, produces in advance parts required by the user based on the forecast and stocks the parts at a stock point near the user. Thus, the supplier is prepared to fulfill a request from the user to deliver a predetermined volume of parts of a predetermined kind within a predetermined delivery time.

However, with popular parts, the forecast shipment volume tends to increase, whereas with unpopular parts the forecast shipment volume tends to decrease. Thus, the user does not always place an order that matches the forecast volume with the supplier and, in reality, there occurs a case where there is a large gap between the forecast volume and the actually ordered volume.

In a case where the forecast volume exceeds the actually ordered volume, the supplier is forced to keep an excessive volume of parts in stock. On the contrary, in a case where the actually ordered volume exceeds the forecast volume, there occurs a drawback that the supplier cannot supply the parts required by the user.

In addition, the volume of parts stocked at the stock point is not necessarily a volume for a single delivery. However, in a case where an excessive volume of parts are ordered suddenly, a volume required for the order may be secured, but this breaks the planned smooth delivery of parts and causes a shortage of parts to be supplied in the next supply and a supply following the next supply. As this occurs, it is not clear what caused the short supplies of the required parts; the order by the user which exceeded the forecast volume or the failure by the supplier of transportation of the forecast volume of parts to the stock point. Then, in either of the cases, it is always the supplier (the weaker party) who is responsible for solving the issue at its own cost.

An object of the present invention is to provide a data processing method for a parts supply management system that can complement the aforementioned conventional system by solving the problems inherent therein and which can deal with request from a user as the circumstances require by allowing information to be closely exchanged between the user and a supplier.

Another object of the present invention is to provide a data processing method for a parts supply management system which utilizes networks.

A further object of the present invention is to provide a display method for a parts supply management system which can make clear the responsibilities to be under taken by the user and the supplier.

An object of the present invention is to provide a simulation method for a parts supply management system which can determine an optimum path for the user and the supplier to take.

### DISCLOSURE OF THE INVENTION

According to the present invention, there is provided a data processing method for a parts supply management system having a supplier side sever and a user side server which are both connected accessibly to a network comprises the steps of:
at the supplier side server,
receiving parts utilization forecast information and order information from the user side server via the network;
storing the parts utilization forecast information and the order information;
obtaining production arrangement information based on the parts utilization forecast information, the production arrangement information being used to initiate arrangement for production of parts and transportation of parts so produced;
obtaining stock forecast information based on the parts utilization forecast information or the order information; and
obtaining supplement information based on the parts utilization forecast information and the stock forecast information, the supplement information being used to initiate supplement of parts and transportation of parts so supplemented.

In addition, it is preferable that the supplier side server produces a display screen including the production arrangement information, the stock forecast information and the supplement information and transmits the display screen to the user side server.

Furthermore, it is preferable that the production arrangement information is determined based on parts utilization forecast information for a first period which is equal to or longer than a required period for supplying parts from the supplier to the user.

Moreover, it is preferable that the supplement information is determined based on parts utilization forecast information and stock forecast information for a second period which is shorter than the first period.

In addition, it is preferable that the supplier side sever compares the order information with the stock forecast information and issues an alarm on the display screen in case a volume indicated in the stock forecast information does not reach a volume indicated in the order information.

Furthermore, it is preferable that the supplier side server obtains delivery agreed volume information corresponding to a parts volume which the supplier agrees to deliver to the user based on the parts utilization forecast information and stock agreed volume information corresponding to a parts volume which the supplier agrees to keep as a stock for the user and displays the information on the display screen.

Moreover, it is preferable that the supplier side server obtains excessively utilized volume information representing an order status on the user side based on the delivery agreed volume information and the order information and displays the information on the display screen.

In addition, it is preferable that the supplier side server obtains information representing a parts supply status on the supplier side based on the production arrangement information and the supplement information and displays the information on the display screen.

Furthermore, it is desirable that the supplier side server receives emergency transportation information transmitted from the user side server via the network and modifies the stock forecast information based on the emergency transportation information.

Moreover, it is preferable that the emergency transportation information includes information on a transportation method.

In addition, it is preferable that the supplier side server transmits the production arrangement information, the stock forecast information and the supplement information to the user side server via the net work in order to create a display screen.

Furthermore, it is preferable that the supplier side server obtains delivery agreed volume information corresponding to a parts volume which the supplier agrees to deliver to the user based on the parts utilization forecast information and stock agreed volume information corresponding to a parts volume which the supplier agrees to keep as a stock for the user and transmits the information to the user side server via the network.

Moreover, it is preferable that the supplier side server obtains information representing a parts supply status on the supplier side based on the production arrangement information and the supplement information and transmits the information to the user side server via the network.

### EFFECT OF THE INVENTION

In the display method for a parts supply management system according to the present invention, since "PRODUCTION ARRANGEMENT VOLUME" data and "SHIPMENT AGREED STOCK VOLUME" data are obtained based on the "FORECAST" data and "SUPPLEMENT VOLUME" data is obtained based on the "SHIPMENT AGREED STOCK VOLUME" data, it is possible to promptly deal with a change in parts order forecast volume requested by the user.

In addition, in the display method for a parts supply management system according to the present invention, since the arrangement for production of parts is implemented (the "PRODUCTION ARRANGEMENT VOLUME" data is obtained) within the first period which is longer than the period required for supplying parts from the supplier to the user, and since the supplement is implemented (the "SUPPLEMENT VOLUME" data is obtained) within the second period which is shorter than the first period, it is possible to promptly deal with a change in parts order forecast volume requested by the user. Note that the period required for supplying parts from the supplier to the user is referred to as a period which corresponds to "PRODUCTION PERIOD" data + "REQUIRED PERIOD" data. In addition, the first period corresponds to "DETERMINATION PERIOD" data, and the second period to the "REQUIRED PERIOD" data.

Furthermore, in the display method for a parts supply management system according to the present invention, since delivery forecast is implemented based on the "FORECAST" data and "FIRM ORDER" data which are both provided from the user, an alarm is displayed in case there is made a forecast that delivery cannot be made as required by the user.

Moreover, in the display method for a parts supply management system according to the present invention, since "EXCESSIVELY UTILIZED VOLUME ACCUMULATION" data and "SHORT VOLUME ACCUMULATION" data are obtained, it is possible to make clear which should be responsible for a deteriorated parts delivery status; the user or the supplier.

### BRIEF DESCRIPTION OF THE DRAWINGS

Fig. 1 is a schematic diagram showing a data processing method for a parts supply management system according to the present invention.
Fig. 2 is a flowchart showing the flow of a total process of the data processing method for the parts supply management system according to the present invention.
Fig. 3 is a diagram illustrating an example of the data configuration of "forecast" data.
Fig. 4 is a diagram illustrating an example of the data configuration of "firm order" data.
Fig. 5 is a diagram illustrating an example of the data configuration of "emergency transportation information" data.
Fig. 6 is a flowchart for obtaining "shipment agreed volume" data, "shipment agreed stock volume" data, "production arrangement volume" data and "production arrangement volume planned for warehousing" data.
Fig. 7 is a flowchart for obtaining "shipment prepared stock volume" data, "supplement volume" data and "supplement volume planned for warehousing" data.
Fig. 8 is a flowchart for obtaining "excessively utilized volume accumulation" data and "delivery designation" data.
Fig. 9 is a flowchart for obtaining "short volume accumulation" data.
Fig. 10 is a flowchart for obtaining "emergency transportation volume planned for warehousing" data.
Fig. 11 is a diagram showing an example of a delivery status screen for use for the data processing method for the parts supply management system according to the present invention.
Fig. 12 is a diagram showing another example of a delivery status screen for use for the data processing method for the parts supply management system according to the present invention.
Fig. 13 is a diagram showing an example of a delivery status screen for use for the data processing method for the parts supply management system according to the present invention.
Fig. 14 is a diagram showing another example of a delivery status screen for use for the data processing method for the parts supply management system according to the present invention.
Fig. 15 is a diagram showing an example of a delivery status screen for use for the data processing method for the parts supply management system according to the present invention.
Fig. 16 is a diagram showing another example of a delivery status screen for use for the data processing method for the parts supply management system according to the present invention.
Fig. 17 is a diagram showing an example of a delivery status screen for use for the data processing method for the parts supply management system according to the present invention.
Fig. 18 is a diagram showing another example of a delivery status screen for use for the data processing method for the parts supply management system according to the present invention.

### DETAILED DESCRIPTION OF THE INVENTION

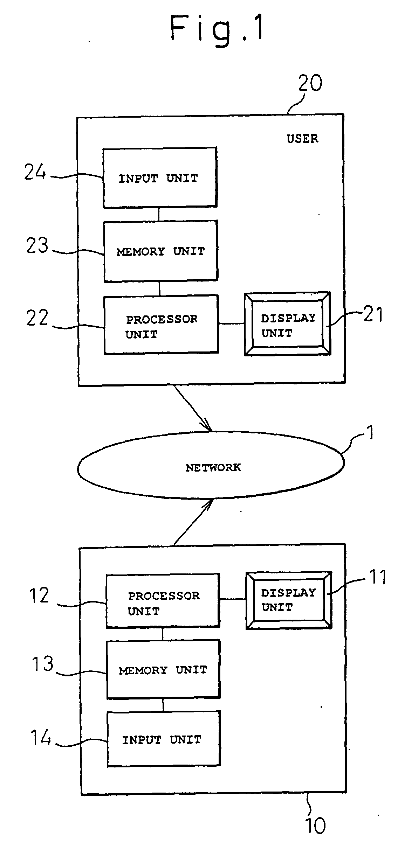

Fig. 1 is a schematic diagram illustrating a parts supply management system according to the present invention. A summary of the system will be described with reference to Fig. 1. The system is constituted by a supplier side server 10 and a user side server 20 which are both connected to networks 1 of various types such as the Internet and special communication lines.

The supplier side server 10 comprises a display unit 11, a processor unit 12 for transmitting and receiving various types of data and implementing various types of processes, a main memory unit 13 for memorizing various types of data or the like and an input unit 14 for inputting various types of data and implementing input of various types of operations. In addition, the user side server 20 comprises a display unit 21, a processor unit 22 for transmitting and receiving various types of data and implementing various types of processes, a main memory unit 23 for memorizing various types of data or the like and an input unit 24 for inputting various types of data and implementing input of various types of operations.

Firstly, the supplier produces parts such as electronic components. Next, the supplier transports the parts so produced to a stock point (a warehouse or the like) located near the location of the user for temporary stock. Thus, the supplier is prepared for prompt delivery of parts for an order received from the user. Note that a server can be disposed at the stock point. In this case, various types of data can be transmitted to the supplier side server 10 from this stock point side server via the network 1.

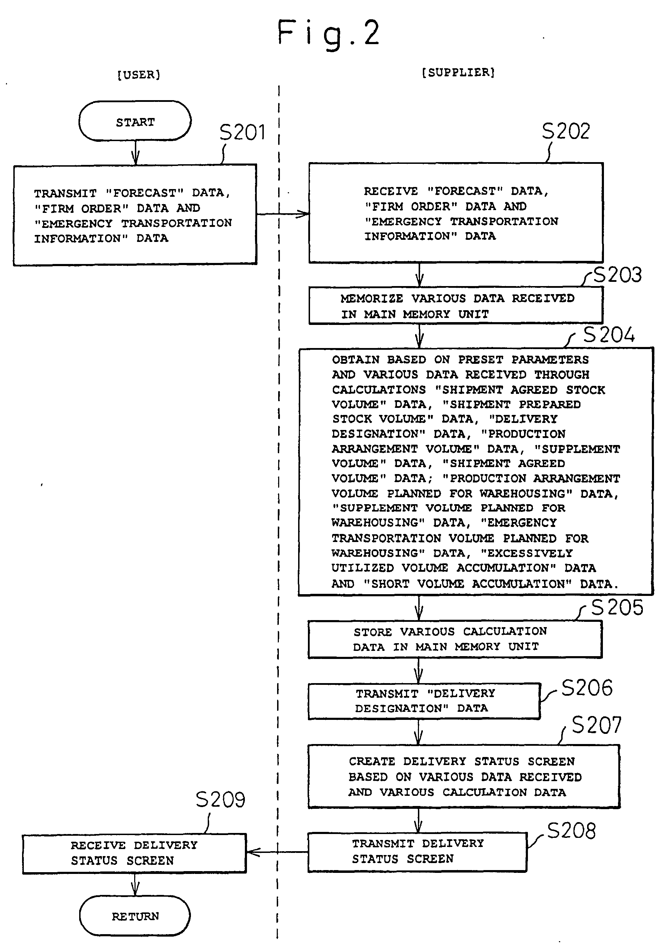

Fig. 2 is a flowchart illustrating the flow of an overall process in the data processing system for the parts supply management system according to the present invention. The overall processing flow of the system will be described with reference to Fig. 2. The overall process flow shown in Fig. 2 is executed mainly by the processor unit 12 in accordance with a main program stored in advance in the main memory unit 13 on the supplier side server 10, whereas on the user side server 20 the overall process flow is executed mainly by the processor unit 22 in accordance with a main program stored in advance in the main memory unit 23.

Firstly, the user inputs "FORECAST" data, "FIRM ORDER" data or "EMERGENCY TRANSPORTATION INFORMATION" data using the input unit 24. Next, the "FORECAST" data, "FIRM ORDER" data or "EMERGENCY TRANSPORTATION INFORMATION" data is transmitted to the supplier side server via the network 1 (step 201). The details of the various types of data will be described later.

Next, the supplier side server 10 receives the "FORECAST" data, "FIRM ORDER" data or "EMERGENCY TRANSPORTATION INFORMATION" data (step 202).

Next, the "FORECAST" data, "FIRM ORDER" data and "EMERGENCY TRANSPORTATION INFORMATION" data so received are stored in the memory means 13 (step 203).

Following this, the supplier side server 10 calculates "SHIPMENT AGREED STOCK VOLUME" data, "SHIPMENT PREPARED STOCK VOLUME" data, "EXCESSIVELY UTILIZED VOLUME ACCUMULATION" data, "SHORT VOLUME ACCUMULATION" data, "SHIPMENT AGREED VOLUME" data, "PRODUCTION ARRANGEMENT VOLUME" data, "PRODUCTION ARRANGEMENT VOLUME PLANNED FOR WAREHOUSING" data, "SUPPLEMENT VOLUME" data, "SUPPLEMENT VOLUME PLANNED FOR WAREHOUSING" data and "EMERGENCY TRANSPORTATION VOLUME PLANNED FOR WAREHOUSING" data based on parameters stored and the various types of data so stored in the main memory means 13 (step 204). The parameters and calculation method will be described later.

Next, the various types of data so calculated are then stored in the main memory unit 13 (step 205).

Following this, "DELIVERY DESIGNATION" data based on the "FIRM ORDER" data is transmitted to the stock point (step 206). Parts stocked at the stock point are then delivered to the user in accordance with this "DELIVERY DESIGNATION" data.

Next, a delivery status screen is created based on the various types of received data, as well as the various types of data obtained through calculation (step 207). The details of the delivery status screen will be described later.

Following this, the delivery status screen so created is transmitted to the user side server 20 via the network 1 (step 208).

Next, the user side server 20 receives the delivery status screen (step 209) and displays the delivery status screen on the display unit 21. The user can confirm a parts delivery forecast through the delivery status screen. In addition, while confirming the delivery status screen so received, the user further transmits "FORECAST" data, "FIRM ORDER" data and "EMERGENCY TRANSPORTATION INFORMATION" data for orders from the next time and onward. Then, similar steps are repeated.

Note that while, in the flow illustrated in Fig. 2, the delivery status screen may be transmitted from the supplier side server 10 to the user side server 20, the supplier side server 10 only transmits predetermined data and, upon receipt thereof, the user side server 20 may produce a delivery status screen in accordance with software stored in advance in the user side server 20.

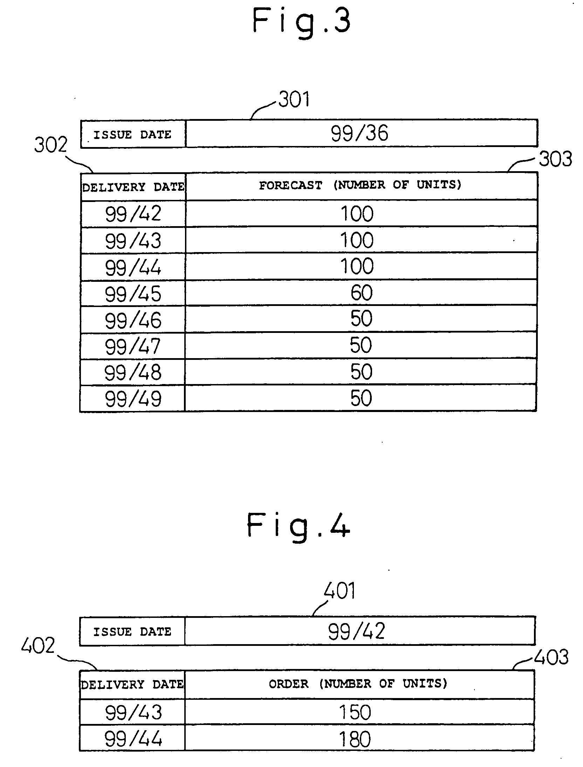

Fig. 3 is a diagram illustrating one example of the data configuration of the "FORECAST" data. The "FORECAST" data will be described using Fig. 3. As shown, the "FORECAST" data is constituted by forecast issued date data 301, predicted delivery data 302 and forecast data 303. Here, the data configuration shown therein indicates that the user forecasts, as of the 36^{th} week in 1999, orders of 100 units in the 42^{nd} week, 100 units in the 43^{rd} week, 100 units in the 44^{th} seek, 60 units in the 45^{th} week, 50 units in the 46^{th} week, 50 units in the 47^{th} week, 50 units in the 48^{th} week, and 50 units in the 49^{th} week.

While Fig. 3 describes the data for 8 weeks from the 42^{nd} week to the 49^{th} week in 1999, the data to be described is not limited to data for 8 weeks and data for any period of time may be transmitted. In addition, in Fig. 3, while the delivery period data is described as weekly data, a daily unit, a weekly unit or any other length of time unit may be used as a reference to the time period depending upon the situation. Furthermore, in Fig. 3, while the "FORECAST" data is expressed in units, it may be expressed in pieces.

Fig. 4 is a diagram illustrating an example of the data configuration of the "FIRM ORDER" data. The "FIRM ORDER" data will be described using Fig. 4. As shown, the "FIRM ORDER" data is constituted by firm order issued date data 401, predicted delivery data 402 and order data 403. Here, the data is configured such that the user places, as of the 42^{nd} week in 1999, official parts firm orders of 150 units in the 43^{rd} week and 180 units in the 44^{th} week.

While Fig. 4 describes the data for two weeks of the 43^{rd} week and the 44^{th} week in 1999, the data to be described is not limited to data for two weeks and data for any period of time may be attached. In addition, in Fig. 4, while the delivery period data is described as weekly data, a daily unit, a monthly unit or any other length of time unit may be used as a reference to the time period depending upon situations. Furthermore, in Fig. 4, while the "FIRM ORDER" data is expressed in units, it may be expressed in pieces.

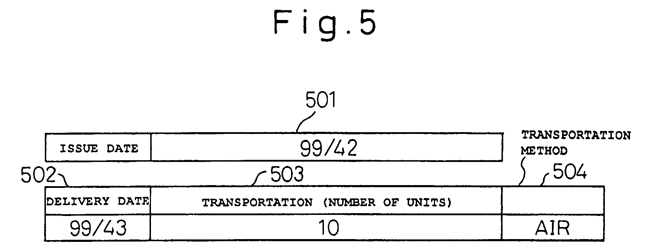

Fig. 5 is a diagram illustrating one example of the data configuration of the "EMERGENCY TRANSPORTATION INFORMATION" data. The "EMERGENCY TRANSPORTATION INFORMATION" data will be described using Fig. 5. As shown, the "EMERGENCY TRANSPORTATION INFORMATION" data is constituted by emergency transportation information issued date data 501, predicted delivery data 502, transportation data 503 and transportation method data 504. Here, the data is configured such that a request is made to air-ship 10 units to the stock point so as to be warehoused in the 43^{rd} week in 1999.

While Fig. 5 describes data for one week of the 43^{rd} week in 1999, the data to be described is not limited to data for one week but data for any period of time may be attached. In addition, in Fig. 5, while the delivery period data is described as weekly data, a daily unit, a monthly unit or any other length of time unit may be used as a reference to the time period depending upon situations. Furthermore, in Fig. 5, while the "TRANSPORTATION" data is expressed in units, it may be expressed in pieces. Furthermore, other transportation means such as boats and trucks may be used as other transportation methods.

Next, various parameters will be described. Included in the various parameters are "DETERMINATION PERIOD" data, "STOCK PERIOD" data, "PRODUCTION PERIOD" data, "REQUIRED PERIOD" data and "DELIVERY PERIOD" data. In addition, the various parameters are stored in the main memory unit 12 in advance.

The "DETERMINATION PERIOD" is a parameter for use in fixing a timing at which "PRODUCTION ARRANGEMENT VOLUME" or the like, which will be described later, is determined. The "STOCK PERIOD" data is a parameter for use in determining "SHIPMENT AGREED STOCK VOLUME". The "PRODUCTION PERIOD" data is a parameter which relates to a period required for production of target parts. The "REQUIRED PERIOD" data is a parameter which relates to a period required for transportation of parts from the supplier to the stock point and is used in determining a timing at which "SUPPLEMENT VOLUME" or the like is determined. The "delivery period" data is a parameter which relates to a period required for delivery of parts from the stock point to the user.

In descriptions to be made hereinafter, the "DETERMINATION PERIOD" data is set to 6 weeks in advance, the "STOCK PERIOD" data is set to 4 weeks in advance, the "PRODUCTION PERIOD" data is set to 2 weeks in advance, the "REQUIRED PERIOD" is set to 3 weeks in advance, and the "DELIVERY PERIOD" data is set to 0 weeks in advance. Note that since the "DETERMINATION PERIOD" data is data for use in determining a timing at which production arrangement of parts is fixed, it is desirable that the data is equal to or longer than the "PRODUCTION PERIOD" data + the "REQUIRED PERIOD" data. In addition, these parameters are those that can freely be set depending upon situations and therefore they are not limited to the values designated above.

Next, the various data that are obtained by calculation will be described.

The "SHIPMENT AGREED VOLUME" data is data indicating the volume of parts which the supplier has agreed to ship to the user within a week corresponding to the "DETERMINATION PERIOD" data. For example, assuming that it is now the 36^{th} seek in 1999 and the "DETERMINATION PERIOD" is 6 weeks, the shipment agreed volume of parts will be disclosed in the 42^{nd} week in 1999.

The "SHIPMENT AGREED STOCK VOLUME" data is data indicating a volume of parts which the supplier has agreed, with the user, to warehouse at the stock point at a point in time in the beginning of the week corresponding to the "DETERMINATION PERIOD" data. In addition, the volume of parts to be warehoused at the stock point is a volume for a period (here, 4 weeks) corresponding to the "STOCK PERIOD" data.

The "PRODUCTION ARRANGEMENT VOLUME" data is data indicating a volume of parts that is designated for production by the supplier.

The "PRODUCTION ARRANGEMENT VOLUME PLANNED FOR WAREHOUSING" data is data indicating when to warehouse the parts designated for production at the stock point and the data is obtained based on the "PRODUCTION PERIOD" data and the "REQUIRED TIME" data.

The "SHIPMENT PREPARED STOCK VOLUME" data is data indicating a volume of parts that are to be actually stocked at the stock point at a point in time at the beginning of the relevant week or a volume of parts which are expected to be stocked at the stock point at a point in time at the beginning of the relevant week as a result of simulation. Note that in the latter case the volume is described by being put in parentheses.

The "SUPPLEMENT VOLUME" data is data indicating a volume of parts that is designated for production for a supplement.

The "SUPPLEMENT VOLUME PLANNED FOR WAREHOUSING" data is data indicating when to warehouse, at the stock point, the parts which are designated for production for a supplement and the data is obtained based on the "PRODUCTION PERIOD" data and/or the "REQUIRED PERIOD" data.

The "EXCESSIVELY UTILIZED VOLUME ACCUMULATION" data is data indicating an accumulation of "FIRM ORDER" data received from the user which exceeds the "SHIPMENT AGREED VOLUME" data which indicates the volume of parts that the supplier agreed with the user to ship to the user.

The "SHORT VOLUME ACCUMULATION" data is data indicating an accumulation of volumes of parts which are in short supply if parts are not warehoused at the stock point as indicated by the "PRODUCTION ARRANGEMENT VOLUME" data and "SUPPLEMENT VOLUME" data.

The "EMERGENCY TRANSPORTATION VOLUME PLANNED FOR WAREHOUSING" data is data indicating when the parts that are to be transported urgently will be stocked at the stock point, and the data is obtained based on the "REQUIRED PERIOD" data.

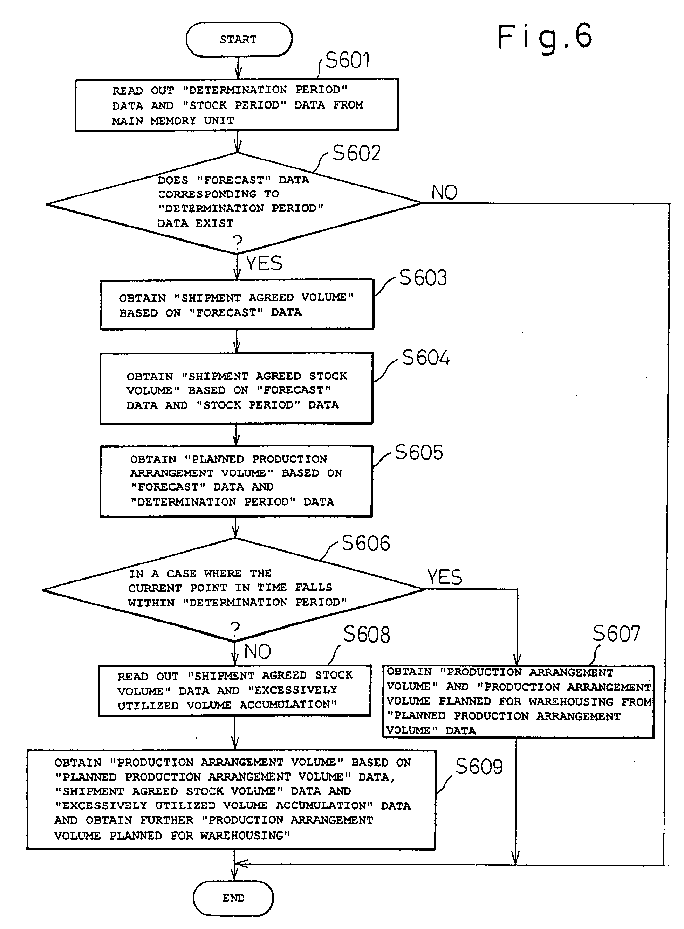

Next, referring to Figs. 6 to 10, a method for obtaining various types of data through calculation will be described below. Each process illustrated in Figs. 6 to 10 is executed mainly by the processor unit 12 in accordance with each program stored in the main memory unit 13.

Fig. 6 is a flowchart for obtaining the "SHIPMENT AGREED VOLUME" data, "SHIPMENT AGREED STOCK VOLUME" data, "PRODUCTION ARRANGEMENT VOLUME" data and "PRODUCTION ARRANGEMENT VOLUME PLANNED FOR WAREHOUSING" data.

Firstly, the "DETERMINATION PERIOD" data (in this case, 6 weeks) and the "STOCK PERIOD" data (in this case, 4 weeks) which are read out were both stored in the main memory unit 13 in advance (step 601).

Next, it is determined whether or not latest "FORECAST" data exists which corresponds to the "DETERMINATION PERIOD" data (step 602). If no corresponding data exists, this flow is completed. If corresponding data exists, the latest corresponding "FORECAST" data is made to be the "SHIPMENT AGREED VOLUME" data as it is (step 603). Note that this may be changed such that the "SHIPMENT AGREED VOLUME" is determined based on trends of the "FORECAST" data and the "FIRM ORDER" data that have existed up until the present time.

Next, the "SHIPMENT AGREED STOCK VOLUME" data is obtained based on the "STOCK PERIOD" data (step 604). In a case where the week corresponding to the "DETERMINATION PERIOD" is the 42^{nd} week and the "STOCK PERIOD" data is 4 weeks, the "FORECAST" data for 4 weeks from the 42^{nd} week to the 45^{th} week is summed to become the "SHIPMENT AGREED STOCK VOLUME" data.

Next, the "PLANNED PRODUCTION ARRANGEMENT VOLUME" data is obtained based on the "FORECAST" data and the "DETERMINATION PERIOD" data (step 606). Note that the "PLANNED PRODUCTION ARRANGEMENT VOLUME" data is data which is used as a matter of convenience to obtain the "PRODUCTION ARRANGEMENT VOLUME" data. To be more specific, the "PLANNED PRODUCTION ARRANGEMENT VOLUME" data can be obtained from the following expression. In the expression, "n" indicates how many weeks have elapsed since the initiation of the system, and "a" indicates the week when the system was initiated.
The "PLANNED PRODUCTION ARRANGEMENT VOLUME" data of [a+(n-1)] week = 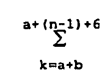 (the "SHIPMENT AGREED VOLUME" data of k week)
+ [a+(n-1)+7] week of the "FORECAST" data for [a+(n-1)] week
+ [a+(n-1)+8] week of the "FORECAST" data for [a+(n-1)] week
+ [a+(n-1)+9] week of the "FORECAST" data for [a+(n-1)] week 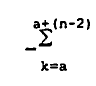 (the "PRODUCTION ARRANGEMENT VOLUME" data of k week).
where in a case where the value of the "PLANNED PRODUCTION ARRANGEMENT VOLUME" data of [a+(n-1)] week becomes minus, it becomes 0. In addition, when n=1, 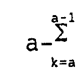 (the "PRODUCTION ARRANGEMENT VOLUME" data for k week)=0.

Next, it is determined whether or not the current point in time since the initiation of the system falls within the "DETERMINATION PERIOD" data (step 606). Here, it is determined whether or not the current point in time falls within 6 weeks since the supplier side server 10 initially started to receive the "FORECAST" data or the like from the user side server 20.

If the current point in time falls within the "DETERMINATION PERIOD" data, the flow is branched off to step 607. In step 607, the "PLANNED PRODUCTION ARRANGEMENT VOLUME" data is made to be the "PRODUCTION ARRANGEMENT VOLUME" data as it is. Furthermore, the "PRODUCTION ARRANGEMENT VOLUME PLANNED FOR WAREHOUSING" data for a week corresponding to the "PRODUCTION PERIOD" data + the "REQUIRED PERIOD" data is made to be the "PRODUCTION ARRANGEMENT VOLUME" data. For example, assuming that the "PRODUCTION PERIOD" data is 2 weeks and that the "REQUIRED PERIOD" data is 3 weeks, it is indicated that a volume of parts corresponding the "PRODUCTION ARRANGEMENT VOLUME" data are to be warehoused in 5 weeks. That is, an estimated timing at which parts are warehoused is determined in consideration of a period of time required after the production arrangement of parts is implemented, thereafter the parts being produced, and until the parts so produced are transported to the stock point.

In addition, in step 606, if it is determined that the current point in time does not fall within the "DETERMINATION PERIOD" data, the flow is branched off to step 608. In step 608, the "SHIPMENT AGREED STOCK VOLUME" data and the "EXCESSIVELY UTILIZED VOLUME ACCUMULATION" data are read out from the main memory unit 13. Next, the "PRODUCTION ARRANGEMENT VOLUME" data is obtained from the "PLANNED PRODUCTION ARRANGEMENT VOLUME" data and the "EXCESSIVELY UTILIZED VOLUME ACCUMULATION" data which are both obtained in step 605. To be specific, if the "EXCESSIVELY UTILIZED VOLUME ACCUMULATION" data is negative, the "PRODUCTION ARRANGEMENT VOLUME" data = the "PLANNED PRODUCTION ARRANGEMENT VOLUME" data + "EXCESSIVELY UTILIZED ACCUMULATION VOLUME" data. In addition, if the "EXCESSIVELY UTILIZED VOLUME ACCUMULATION" data is zero or positive, the "PRODUCTION ARRANGEMENT VOLUME" data = the "PLANNED PRODUCTION ARRANGEMENT VOLUME" data. Furthermore, in step 608, the "PRODUCTION ARRANGEMENT VOLUME PLANNED FOR WAREHOUSING" data is obtained by the same procedure as used in step 607 (step 609), and the flow in Fig. 6 is completed.

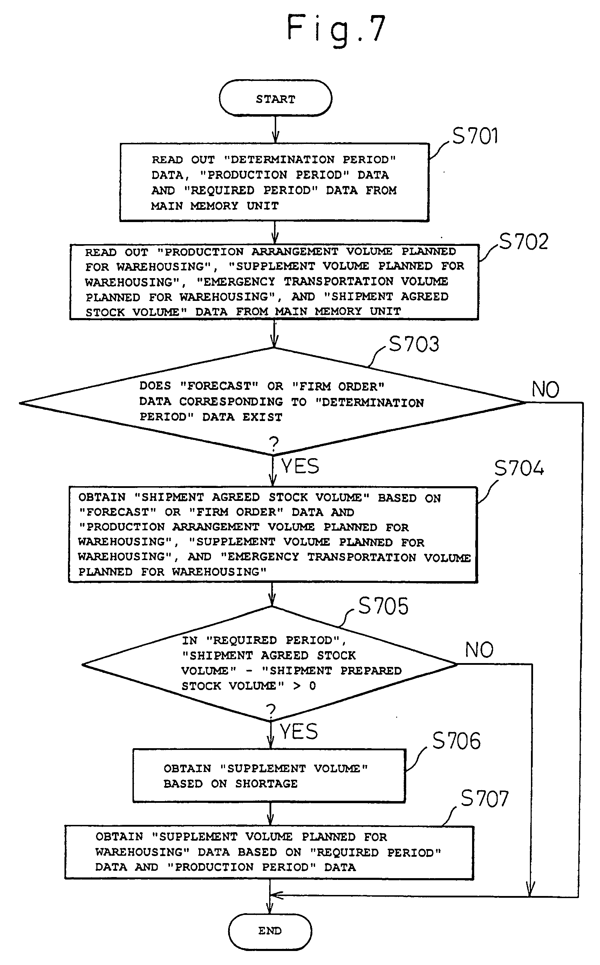

Fig. 7 is a flowchart for obtaining the "SHIPMENT PREPARED STOCK VOLUME" data, the "SUPPLEMENT VOLUME" data and the "SUPPLEMENT VOLUME PLANNED FOR WAREHOUSING" data.

Firstly, the "DETERMINATION PERIOD" data and the "REQUIRED PERIOD" data are read out from the main memory unit 13 (step 701). Similarly, the "PRODUCTION ARRANGEMENT VOLUME PLANNED FOR WAREHOUSING" data, the "SUPPLEMENT VOLUME PLANNED FOR WAREHOUSING" data, the "EMERGENCY TRANSPORTATION VOLUME PLANNED FOR WAREHOUSING" data and the "SHIPMENT AGREED STOCK VOLUME" data are read out from the main memory unit 13 (step 702).

Next, it is determined whether or not "FORECAST" data or "FIRM ORDER" data exists which corresponds to the "DETERMINATION PERIOD" data (step 703). For example, assuming that the current point in time is the 36^{th} week in 1999 and that the "DETERMINATION PERIOD" data is 6 weeks, it is determined whether or not the "FORECAST" data or the "FIRM ORDER" data for the 42^{nd} week exists. If no corresponding data exists, this flow is completed.

If corresponding data exists, next, the "SHIPMENT PREPARED STOCK VOLUME" data is obtained based on the "FORECAST" data or the "FIRM ORDER" data and the "PRODUCTION ARRANGEMENT VOLUME PLANNED FOR WAREHOUSING" data, the "SUPPLEMENT VOLUME PLANNED FOR WAREHOUSING" data, the "EMERGENCY TRANSPORTATION VOLUME PLANNED FOR WAREHOUSING" data and the "SHIPMENT AGREED STOCK VOLUME" data. Namely, "SHIPMENT PREPARED STOCK VOLUME" data for the Xth week is obtained by subtracting the "FORECAST" data of the Xth week or the "FIRM ORDER" data of the Xth week, whichever larger, from the "SHIPMENT PREPARED STOCK" data for the (X-1)th week and adding the "PRODUCTION ARRANGEMENT VOLUME PLANNED FOR WAREHOUSING" data of the (X-1)th week, the "SUPPLEMENT VOLUME PLANNED FOR WAREHOUSING" data of the (X-1)th week and the "EMERGENCY TRANSPORTATION VOLUME PLANNED FOR WAREHOUSING" data to the result obtained from the subtraction. In other words, the stock level at the stock point is estimated by subtracting the volume of parts shipped from the stock point this week or a volume of parts that will be shipped from the stock point within this week from the stock volume existing at the stock point, and adding it to that obtained from the subtraction the volume of parts that have been warehoused this week or a volume of parts that will be warehoused within this week. The "SHIPMENT PREPARED STOCK VOLUME" may be simulated for every week. In addition, for example, assuming that the current point in time is the 40^{th} week and the "REQUIRED PERIOD" is 3 weeks, the "SHIPMENT PREPARED STOCK VOLUME" may be simulated only for the 3 weeks of the 41^{st} week to the 43^{rd} week.

Next, it is determined whether or not "SHIPMENT AGREED STOCK VOLUME" - "SHIPMENT PREPARED STOCK VOLUME" is negative for a week corresponding to the "REQUIRED PERIOD" data (step 705). For example, assuming that the current point in time is the 40^{th} week and the "REQUIRED PERIOD" data is 3 weeks, then "SHIPMENT AGREED STOCK VOLUME" - the "SHIPMENT PREPARED STOCK VOLUME" for the 43^{rd} week is considered. Namely, the volume of parts that the supplier has agreed to warehouse at the stock point is compared with the stock forecast simulated in accordance with changes in the "FORECAST" thereafter, and it is determined whether or not the volume of parts at the stock point at that point in time becomes short.

Initially, the supplier side server 10 obtains the "PRODUCTION ARRANGEMENT VOLUME" which corresponds to the designation of production and transportation based on the "FORECAST" data which is parts utilization forecast information from the user. Then, the "SUPPLEMENT VOLUME" data which corresponds to the designation of production and/or transportation of parts is obtained based on the "SHIPMENT PREPARED STOCK VOLUME" data which is stock forecast information obtained through a simulation performed thereafter, whereby it is attempted to adjust the volume of parts to be warehoused at the stock point.

If the condition described in step 705 is met, a volume of parts corresponding to a shortage resulting from the "SHIPMENT PREPARED STOCK VOLUME" - "SHIPMENT AGREED STOCK VOLUME" is made the "SUPPLEMENT VOLUME" data (step 706). Namely, the production and/or transportation of parts is designated so as to additionally supply the stock point with a volume of parts corresponding to the "SUPPLEMENT VOLUME" data.

Next, the "SUPPLEMENT VOLUME PLANNED FOR WAREHOUSING" data is obtained from the "REQUIRED PERIOD" data and/or the "PRODUCTION PERIOD" data (step 707), and the flow shown in Fig. 7 is completed. In supplementing, it is predicted that the parts that have already been produced are warehoused at the stock point after a period corresponding to the "REQUIRED PERIOD" data has elapsed, but it is predicted that parts that will have to be produced are warehoused at the stock point after a period corresponding to the "SUPPLEMENT VOLUME PLANNED FOR WAREHOUSING" data + "REQUIRED PERIOD" data has elapsed. Hereinafter, the "SUPPLEMENT VOLUME PLANNED FOR WAREHOUSING" data is explained as requiring a period corresponding to the "PRODUCTION PERIOD" data + "REQUIRED PERIOD" data but the data may be modified as circumstances require.

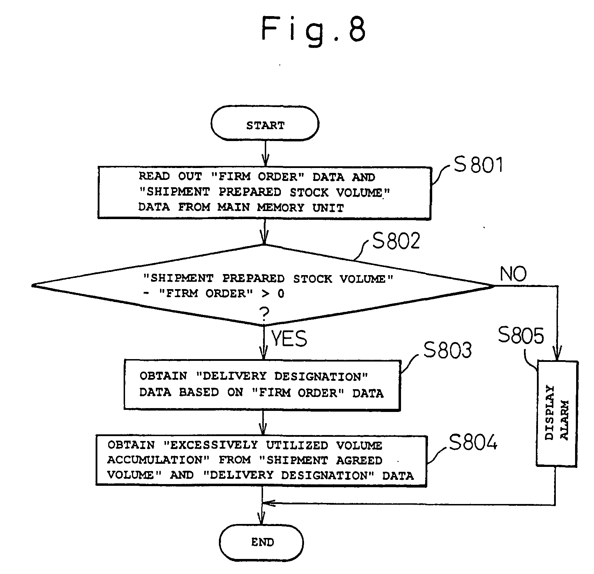

Fig. 8 is a flowchart for obtaining the "EXCESSIVELY UTILIZED VOLUME ACCUMULATION" data and "DELIVERY DESIGNATION" data. Note that a process illustrated in Fig 8 is activated only when the "FIRM ORDER" data for a corresponding week is received.

Firstly, the "FIRM ORDER" data and the "SHIPMENT PREPARED STOCK VOLUME" data for a corresponding week are read out from the main memory unit 13 (step 801).

Next, whether or not ("SHIPMENT PREPARED STOCK VOLUME" data - "FIRM ORDER" data > 0) is determined (step 802).

If the condition in step 802 is met, the flow is branched off to step 803, where the "FIRM ORDER" data is made to be the "DELIVERY DESIGNATION" data as it is. A designated volume of parts is actually delivered from the stock point to the user with that "DELIVERY DESIGNATION" data. Note that a method in which the "FIRM ORDER" data is not made to be the "DELIVERY DESIGNATION" data as it is may be adopted by using other references. For example, the user may be able to show separately from the "FIRM ORDER" data the "DELIVERY DESIGNATION" data which is similar to data obtained by showing the "FIRM ORDER" data in greater detail.

Next, ("DELIVERY DESIGNATION" data - "SHIPMENT AGREED VOLUME" data) is calculated every week, and an accumulation of the results of the calculations is made to be the "EXCESSIVELY UTILIZED VOLUME ACCUMULATION" (step 804). If the "EXCESSIVELY USED VOLUME ACCUMULATION" data is positive, it means that the user has placed a firm order which exceeds the "SHIPMENT AGREED VOLUME" data agreed by the supplier. On the contrary, if the "EXCESSIVELY UTILIZED VOLUME ACCUMULATION" data is negative, it means that the user has placed a firm order which is less than the "SHIPMENT AGREED VOLUME" data agreed by the supplier.

In addition, if the condition in step 802 is not met, the flow is branched off to step 803, where an alarm is displayed (step 805). In a case where an alarm is displayed, the alarm so displayed indicates that a volume of parts corresponding to the firm order placed by the user has not yet been prepared for shipment at the stock point.

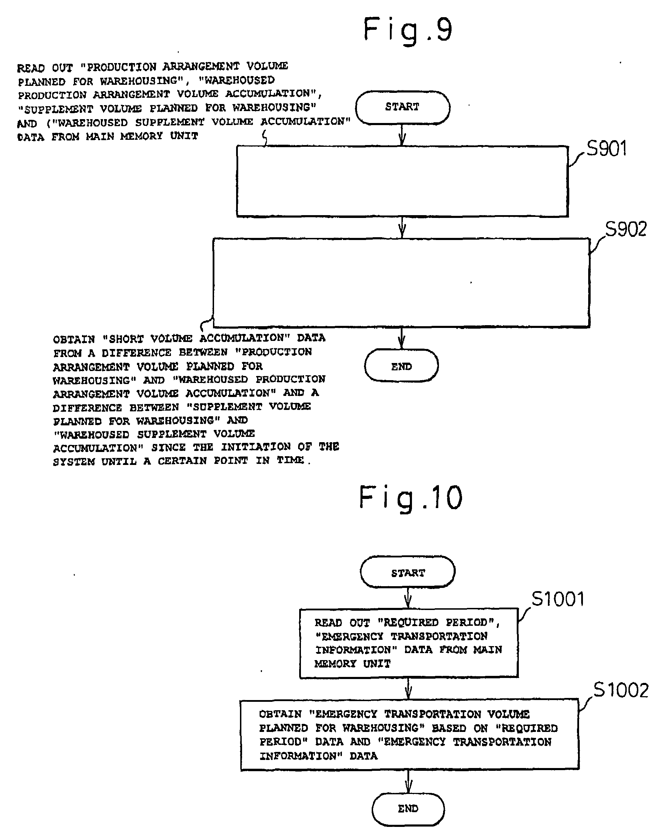

Fig. 9 is a flowchart for obtaining the "SHORT VOLUME ACCUMULATION" data.

Firstly, the "PRODUCTION ARRANGEMENT VOLUME PLANNED FOR WAREHOUSING" data, the "WAREHOUSED PRODUCTION ARRANGEMENT VOLUME ACCUMULATION" data, the "SUPPLEMENT VOLUME PLANED FOR WAREHOUSING" data and the "WAREHOUSED SUPPLEMENT VOLUME ACCUMULATION" data are read out from the main memory unit 13 (step 901). Here, the "WAREHOUSED PRODUCTION ARRANGEMENT VOLUME ACCUMULATION" data indicates the volume of parts that has already been warehoused at the stock point. For example, in a case where there is the "PRODUCTION ARRANGEMENT VOLUME PLANNED FOR WAREHOUSING" data of 360 units in the 41^{st} week in 1999, if 360 units of parts are actually warehoused at the stock point in the 42^{nd} week, the "WAREHOUSED PRODUCTION ARRANGEMENT VOLUME ACCUMULATION" is 360 units.

Next, ("PRODUCTION ARRANGEMENT VOLUME PLANNED FOR WAREHOUSING" - "WAREHOUSED PRODUCTION ARRANGEMENT VOLUME ACCUMULATION") + ("SUPPLEMENT VOLUME PLANNED FOR WAREHOUSING" - "WAREHOUSED SUPPLEMENT VOLUME ACCUMULATION") is calculated every week respectively and an accumulated value of the results of calculations is made to be the "SHORT VOLUME ACCUMULATION" data (step 902). Namely, if the "SHORT VOLUME ACCUMULATION" data is positive, it means that the supplier does not stock at the stock point a volume of parts which matches in volume the "PRODUCTION ARRANGEMENT VOLUME" data and the "SUPPLEMENT VOLUME" data.

In this system, the "WAREHOUSED PRODUCTION ARRANGEMENT VOLUME ACCUMULATION" data and the "WAREHOUSED SUPPLEMENT VOLUME ACCUMULATION" data are inputted from the input unit 14 by the operator, who grasps the actual situation of the stock point side, on the supplier side and the thus input data are then stored in the main memory unit 13. However, a server may be provided on the stock point side, so that data can be inputted from the server to be transmitted to the supplier side server 10. In addition, in this system, the flow illustrated in Fig. 9 is designed to be activated only when the "WAREHOUSED PRODUCTION ARRANGEMENT VOLUME ACCUMULATION" data and the "WAREHOUSED SUPPLEMENT VOLUME ACCUMULATION" data are inputted.

Fig. 10 is a flowchart for obtaining the "EMERGENCY TRANSPORTATION VOLUME PLANNED FOR WAREHOUSING" data.

Firstly, the "REQUIRED PERIOD" data and the "EMERGENCY TRANSPORTATION INFORMATION" data are read from the main memory unit 13 (step 1001).

Next, the "EMERGENCY TRANSPORTATION VOLUME PLANNED FOR WAREHOUSING" data is obtained based on the "REQUIRED PERIOD" data which corresponds to transportation method data (refer to 504 in Fig. 5) included in the "EMERGENCY TRANSPORTATION INFORMATION" data. The "REQUIRED PERIOD" data has been described heretofore as being set in advance to the 3 weeks required for shipment by boat. However, the "REQUIRED PERIOD" data for shipment by air may be set to 1 week and the "REQUIRED PERIOD" data for first-class shipment by air may be set to 3 days. Here, it is determined when parts for emergency transportation are warehoused at the stock point in accordance with specific transportation methods, and the "EMERGENCY TRANSPORTATION VOLUME PLANNED FOR WAREHOUSING" data is obtained. Note that the flow illustrated in Fig. 10 is activated only when the "EMERGENCY TRANSPORTATION INFORMATION" data is received.

The flow illustrated in Fig. 10 is designed such that the "EMERGENCY TRANSPORTATION VOLUME PLANNED FOR WAREHOUSING" data is automatically obtained when the "EMERGENCY TRANSPORTATION INFORMATION" data is received. However, in a case where the production arrangement or supplement of parts has already been designated, the designation may be made to designate moving forward the timing at which the parts are warehoused at the stock point. Namely, in accordance with the "EMERGENCY TRANSPORTATION INFORMATION" data, the planned timing of warehousing of the "PRODUCTION ARRANGEMENT VOLUME PLANNED FOR WAREHOUSING" data or the "SUPPLEMENT VOLUME PLANNED FOR WAREHOUSING" data is changed so as to be moved forward. Furthermore, in association with the change, the "SHIPMENT PREPARED STOCK VOLUME" data is also changed in accordance with the flow illustrated in Fig. 7.

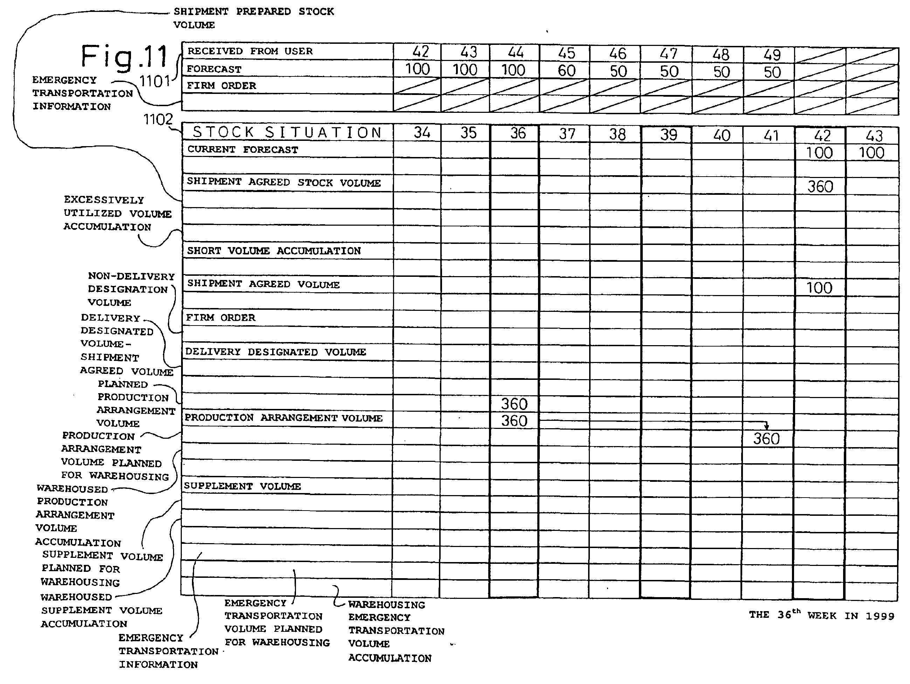

Figs. 11 to 18 are diagrams showing examples of delivery status screens for use in the data processing method for the parts supply management system according to the present invention. The types of delivery status screens that are created based on the received "FORECAST" data, "FIRM ORDER" data and "EMERGENCY TRANSPORTATION INFORMATION" will be described below in accordance with a time series.

Here, exchanging data between the supplier side server 10 and the user side server 20 is initiated in the 36^{th} week in 1999 with a view to starting actual delivery of parts from the 42^{nd} week in 1999. Namely, this system is to be initiated from the 36^{th} week in 1999. Furthermore, here, the "DETERMINATION PERIOD" data is set in advance to 6 weeks, the "STOCK PERIOD" data to 4 weeks, the "PRODUCTION PERIOD" to 2 weeks, the "REQUIRED PERIOD" data for shipment by boat to 3 weeks, the "REQUIRED PERIOD" for shipment by air to 1 week, and the "DELIVERY PERIOD" data to 0 week. Note that the "REQUIRED PERIOD" data is normally set to 3 weeks (shipment by boat).

Fig. 11 indicates the status as of the 36^{th} week in 1999, and as shown by 1101, the "FORECAST" data for the 42^{nd} week to 49^{th} week in 1999 has been received. In addition, neither "FIRM ORDER" data nor "EMERGENCY TRANSPORTATION INFORMATION" has been received. 1102 indicates a delivery status screen created based on the data.

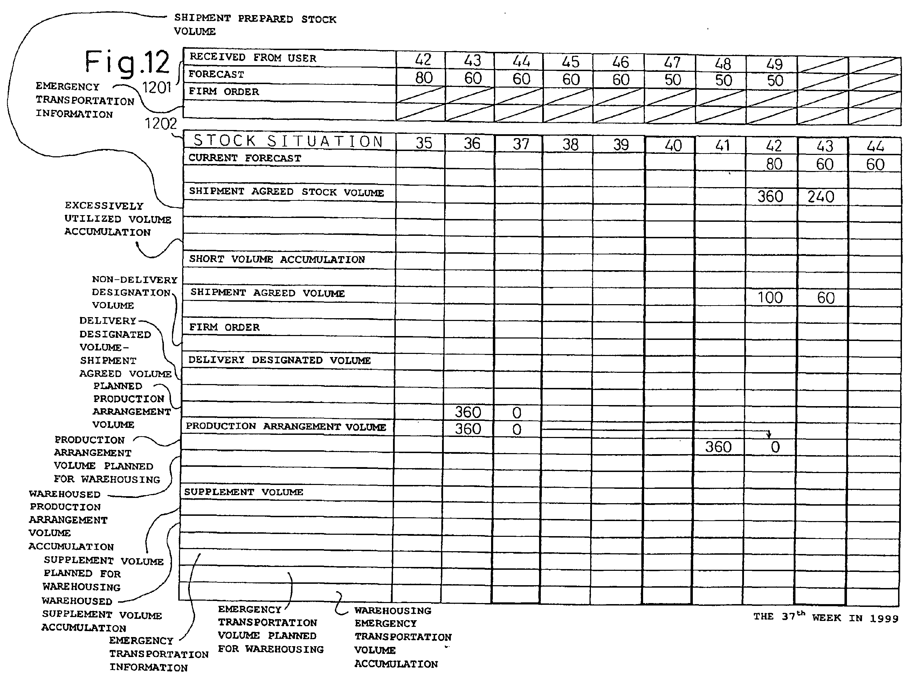

The uppermost rows of 1101 and 1102 indicate weeks in 1999, respectively. Namely, 1101 indicates from the 42^{nd} week in 1999 to the 49^{th} week in 1999, and 1102 indicates from the 34^{th} week in 1999 to the 43^{rd} week in 1999. Hereinafter, this is similar in Figs. 12 to 18.

The latest "FORECAST" data that have been received from the user in the relevant week is indicated in a "CURRENT FORECAST" row in 1102. In addition, the "FIRM ORDER" data and the "EMERGENCY TRANSPORTATION INFORMATION" data that have been received from the user are indicated as they are in "FIRM ORDER" and "EMERGENCY TRANSPORTATION INFORMATION" rows in 1102. In addition, "NON-SHIPMENT DESIGNATED VOLUME" is data indicating a volume of parts of the firm-ordered parts which has not yet been designated to be delivered to the user, and "DELIVERY DESIGNATED VOLUME - SHIPMENT AGREED VOLUME" is data indicating a value resulting when the "SHIPMENT AGREED VOLUME" data is subtracted from the "DELIVERY DESIGNATED VOLUME DATA" data.

In the 36^{th} week, what corresponds to the "DETERMINATION PERIOD" data (6 weeks ahead) is the 42^{nd} week. Therefore, in accordance with the flow illustrated in Fig. 6, a "SHIPMENT AGREED VOLUME" of 100 units and a "SHIPMENT AGREED STOCK VOLUME" of 360 units are obtained through calculation. Namely, the "FORECAST" data of 100 units for the 42^{nd} week is made to be the "SHIPMENT AGREED VOLUME" data as it is. In addition, the "FORECAST" data for 4 weeks of the 42^{nd} week to the 45^{th} week is added and what is so added up is made to be the "SHIPMENT AGREED STOCK VOLUME" of 360 units (100+100+100+60) for the 42^{nd} week.

In addition, a "PLANNED PRODUCTION ARRANGEMENT VOLUME" of 360 unit for the 36^{th} week is obtained through a calculation in accordance with the flow illustrated in Fig. 6. Namely, since this system is initiated in the 36^{th} week, a=36, and in the 36^{th} week, n=1. Therefore, the "PLANNED PRODUCTION ARRANGEMENT VOLUME" data for the 36^{th} week = 100(the "SHIPMENT AGREED VOLUME" data for the 42^{nd} week which is determined in the 36^{th} week) + 100(the "FORECAST" data for the 43^{rd} week) + 100(the "FORECAST" data for the 44^{th} week) + 60(the "FORECAST" data for the 45^{th} week)-0(because n=1) = 360 units.

Furthermore, a "PRODUCTION ARRANGEMENT VOLUME PLANNED FOR WAREHOUSING" of 360 units for the 41^{st} week can be obtained through a calculation in accordance with the flow illustrated in Fig. 6. Namely, it is indicated that parts arranged for production as of the 36^{th} week are thereafter produced and transported and will be warehoused at the stock point in the 41^{st} week which will be 5 weeks ahead (= "PRODUCTION PERIOD" data + "REQUIRED PERIOD" data).

In addition, as of the 36^{th} week, since conditions for the activation of the flows illustrated in Figs. 7 to 10 are not met, the "SHIPMENT PREPARED STOCK VOLUME" data, the "SUPPLEMENT VOLUME" data, the "EMERGENCY TRANSPORTATION VOLUME PLANNED FOR WAREHOUSING" data, the "EXCESSIVELY UTILIZED VOLUME ACCUMULATION" data, the "EMERGENCY TRANSPORTATION VOLUME PLANNED FOR WAREHOUSING" data and the "SHORT VOLUME ACCUMULATION" data cannot be obtained through calculations. In addition, the delivery status screen 1102 created as described above is transmitted to the user side server 20.

Fig. 12 indicates a state in the 37^{th} week, 1999, a week later than the state in Fig. 11. Here, as shown in 1201, it is understood that "FORECAST" data for the 42^{nd} week to the 49^{th} week has been received.

As of the 37^{th} week, what corresponds to the "DETERMINATION PERIOD" data (6 weeks later) is the 43^{rd} week. Therefore, a "SHIPMENT AGREED VOLUME" of 60 units and a "SHIPMENT AGREED STOCK VOLUME" of 240 units for the 43^{rd} week are obtained through calculation. Namely, the "FORECAST" data of 60 units for the 43^{rd} week is made to be the "SHIPMENT AGREED VOLUME" data for the 43^{rd} week. In addition, the "FORECAST" data for 4 weeks of the 43^{rd} week to the 46^{th} week is added to obtain the "'SHIPMENT AGREED STOCK VOLUME" of 240 units (60+60+60+60) for the 43^{rd} week.

In addition, a "PLANNED PRODUCTION ARRANGEMENT VOLUME" of 0 unit for the 37^{th} week is obtained through a calculation in accordance with the flow illustrated in Fig. 6. Namely, since this system is initiated in the 36^{th} week, "a"=36, and in the 37^{th} week, "n"=2. Therefore, the "PLANNED PRODUCTION ARRANGEMENT VOLUME" data for the 37^{th} week = 100(the "SHIPMENT AGREED VOLUME" data for the 42^{nd} week) + 60(the "SHIPMENT AGREED VOLUME" data for the 43^{rd} week, which is to be determined in the 37^{th} week) + 60(the "FORECAST" data for the 44^{th} week) + 60(the "FORECAST" data for the 45^{th} week) + 60(the "FORECAST" data for the 46^{th} week) - 360(the "PRODUCTION ARRANGEMENT VOLUME" data for the 36^{th} week) = -20 units. Since the value is negative, the "PLANNED PRODUCTION ARRANGEMENT VOLUME" data for the 37^{th} week is 0 unit. Furthermore, since the "EXCESSIVELY UTILIZED VOLUME ACCUMULATION" data is 0 unit, the "PRODUCTION ARRANGEMENT VOLUME" data for the 37^{th} week is 0 unit from the "PRODUCTION ARRANGEMENT VOLUME" data = the "PLANNED PRODUCTION ARRANGEMENT VOLUME" data.

Furthermore, a "PRODUCTION ARRANGEMENT VOLUME PLANNED FOR WAREHOUSING" data of 0 unit for the 42^{nd} week can be obtained through calculation in accordance with the flow illustrated in Fig. 6.

In addition, as of the 37^{th} week, since conditions for the activation of the flows illustrated in Figs. 7 to 10 are not met, the "SHIPMENT PREPARED STOCK VOLUME" data, the "SUPPLEMENT VOLUME" data, the "EMERGENCY TRANSPORTATION VOLUME PLANNED FOR WAREHOUSING" data, the "EXCESSIVELY UTILIZED VOLUME ACCUMULATION" data, the "EMERGENCY TRANSPORTATION VOLUME PLANNED FOR WAREHOUSING" data and the "SHORT VOLUME ACCUMULATION" data cannot be obtained through calculation. In addition, the delivery status screen 1202 created as described above is transmitted to the user side server 20.

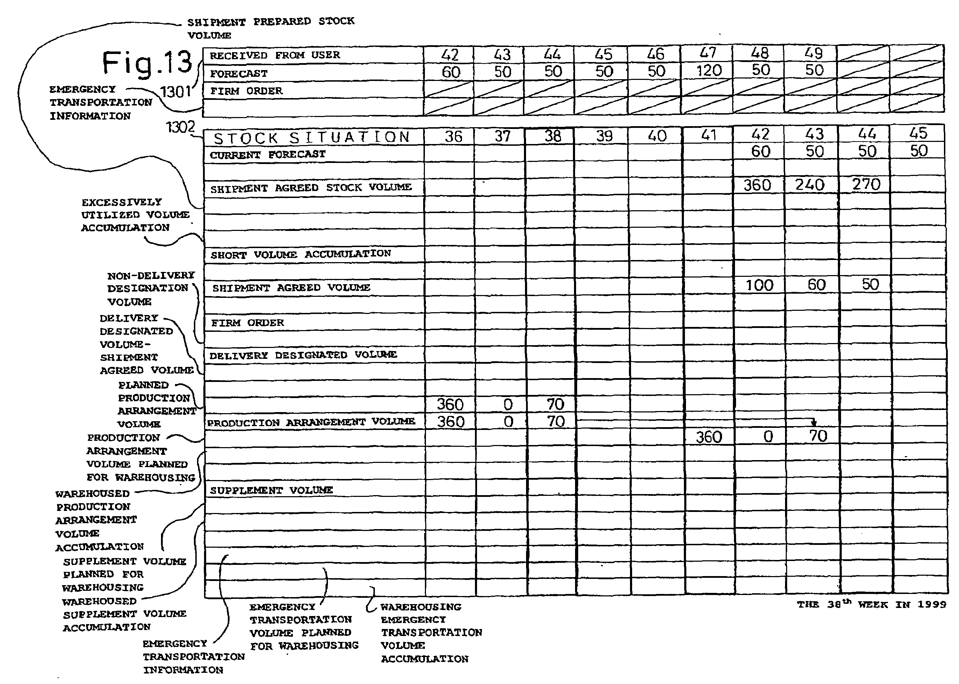

Fig. 13 indicates a point in the 38^{th} week, 1999, a week later than the state in Fig. 12. Here, as shown in 1301, it is understood that the "FORECAST" data for the 42^{nd} week to the 49^{th} week has been received.

As of the 38^{th} week, what corresponds to the "DETERMINATION PERIOD" data (6 weeks ahead) is the 44^{th} week. Therefore, a "SHIPMENT AGREED VOLUME" data of 50 units and a "SHIPMENT AGREED STOCK VOLUME" data of 270 units for the 44^{th} week are obtained through calculation.

In addition, a "PLANNED PRODUCTION ARRANGEMENT VOLUME" data of 70 unit for the 38^{th} week is obtained through a calculation in accordance with the flow illustrated in Fig. 6. Namely, since this system is initiated in the 36^{th} week, "a"=36, and in the 38^{th} week, "n"=3. Therefore, the "PLANNED PRODUCTION ARRANGEMENT VOLUME" data for the 38^{th} week = 100(the "SHIPMENT AGREED VOLUME" data for the 42^{nd} week) + 60(the "SHIPMENT AGREED VOLUME" data for the 43^{rd} week) + 50(the "SHIPMENT AGREED VOLUME" data for the 44^{th} week, which is to be determined in the 38^{th} week) + 50(the "FORECAST" data for the 45^{th} week) + 50(the "FORECAST" data for the 46^{th} week) + 120(the "FORECAST" data for the 47^{th} week) - 360(the "PRODUCTION ARRANGEMENT VOLUME" data for the 36^{th} week) - 0(the "PRODUCTION ARRANGEMENT VOLUME" data for the 37^{th} week)= 70 units. Furthermore, since the "EXCESSIVELY UTILIZED VOLUME ACCUMULATION" data is 0 unit, the "PRODUCTION ARRANGEMENT VOLUME" data for the 38^{th} week is 70 units from the "PRODUCTION ARRANGEMENT VOLUME" data = the "PLANNED PRODUCTION ARRANGEMENT VOLUME" data.

Furthermore, a "PRODUCTION ARRANGEMENT VOLUME PLANNED FOR WAREHOUSING" of 70 units for the 43^{rd} week can be obtained through a calculation in accordance with the flow illustrated in Fig. 6.

In addition, as of the 38^{th} week, since conditions for the activation of the flows illustrated in Figs. 7 to 10 are not met, the "SHIPMENT PREPARED STOCK VOLUME" data, the "SUPPLEMENT VOLUME" data, the "EMERGENCY TRANSPORTATION VOLUME PLANNED FOR WAREHOUSING" data, the "EXCESSIVELY UTILIZED VOLUME ACCUMULATION" data, the "EMERGENCY TRANSPORTATION VOLUME PLANNED FOR WAREHOUSING" data and the "SHORT VOLUME ACCUMULATION" data cannot be obtained through calculation. In addition, the delivery status screen 1302 created as described above is transmitted to the user side server 20.

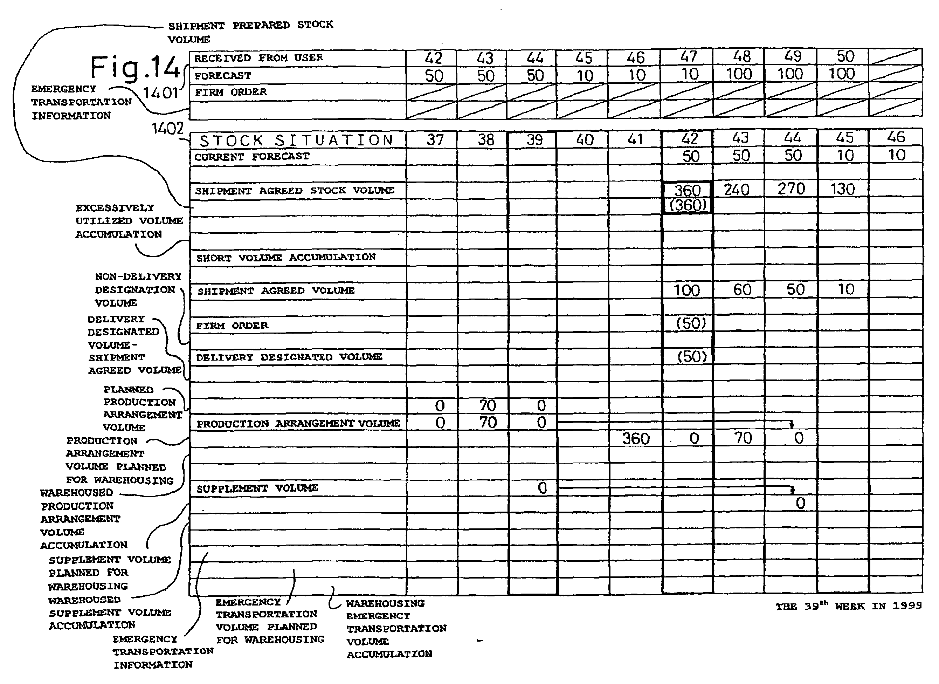

Fig. 14 indicates a point in the 39^{th} week, 1999, a week later than the state in Fig. 13. Here, as shown in 1401, it is understood that "FORECAST" data for the 42^{nd} week to the 50^{th} week has been received.

As of the 39^{th} week, what corresponds to the "DETERMINATION PERIOD" data (6 weeks later) is the 45^{th} week. Therefore, a "SHIPMENT AGREED VOLUME" data of 10 units and a "SHIPMENT AGREED STOCK VOLUME" data of 130 units for the 45^{th} week are obtained through calculations.

In addition, a "PLANNED PRODUCTION ARRANGEMENT VOLUME" data of 0 unit for the 39^{th} week is obtained through a calculation in accordance with the flow illustrated in Fig. 6. Namely, since this system is initiated in the 36^{th} week, "a"=36 and, in the 39^{th} week, "n"=4. Therefore, the "PLANNED PRODUCTION ARRANGEMENT VOLUME" data for the 39^{th} week = 100(the "SHIPMENT AGREED VOLUME" data for the 42^{nd} week) + 60(the "SHIPMENT AGREED VOLUME" data for the 43^{rd} week) + 50(the "SHIPMENT AGREED VOLUME" data for the 44^{th} week) + 10(the "SHIPMENT AGREED VOLUME" data for the 45^{th} week, which is to be determined in the 39^{th} week) + 10(the "FORECAST" data for the 46^{th} week) + 10(the "FORECAST" data for the 47^{th} week) + 100(the "FORECAST" data for the 48^{th} week) - 360(the "PRODUCTION ARRANGEMENT VOLUME" data for the 36^{th} week) - 0(the "PRODUCTION ARRANGEMENT VOLUME" data for the 37^{th} week) - 70(the "PRODUCTION ARRANGEMENT VOLUME" data for the 38^{th} week) = -90 units. Since the value is negative, the "PLANNED PRODUCTION ARRANGEMENT VOLUME" data for the 39^{th} week is 0 unit. Furthermore, since the "EXCESSIVELY UTILIZED VOLUME ACCUMULATION" data is 0 unit, the "PRODUCTION ARRANGEMENT VOLUME" data for the 39^{th} week is 0 unit from the "PRODUCTION ARRANGEMENT VOLUME" data = the "PLANNED PRODUCTION ARRANGEMENT VOLUME" data.

Furthermore, a "PRODUCTION ARRANGEMENT VOLUME PLANNED FOR WAREHOUSING" data of 0 unit for the 44^{th} week can be obtained through a calculation in accordance with the flow illustrated in Fig. 6.

Furthermore, since the 42^{nd} week is 3 weeks later and falls within the "PREDETERMINED PERIOD" data, the "SHIPMENT PREPARED STOCK VOLUME" (360) units can be obtained through a calculation in accordance with the flow illustrated in Fig. 7. The reason why the value is put in parentheses is because it is a predicted value. Here, since the calculation is performed assuming that the "FIRM ORDER" data and the "DELIVERY DESIGNATED VOLUME" data are 50 units, respectively, as indicated for the 42^{nd} week, the values are indicated as being put in parentheses in the respective rows in the 42^{nd} week, but they do not always have to be so indicated.

Furthermore, the "SUPPLEMENT VOLUME" data of 0 unit for the 39^{th} week and the "SUPPLEMENT VOLUME PLANNED FOR WAREHOUSING" data of 0 unit for the 44^{th} week are obtained through calculations from a difference between the "SHIPMENT AGREED STOCK VOLUME" data and the "SHIPMENT PREPARED STOCK VOLUME" data for the 42^{nd} week.

In addition, as of the 39^{th} week, since conditions for the activation of the flows illustrated in Figs. 8 to 10 are not met, the "EXCESSIVELY UTILIZED VOLUME ACCUMULATION" data, the "EMERGENCY TRANSPORTATION VOLUME PLANNED FOR WAREHOUSING" data and the "SHORT VOLUME ACCUMULATION" data cannot be obtained through calculation. In addition, the delivery status screen 1402 created as described above is transmitted to the user side server 20.

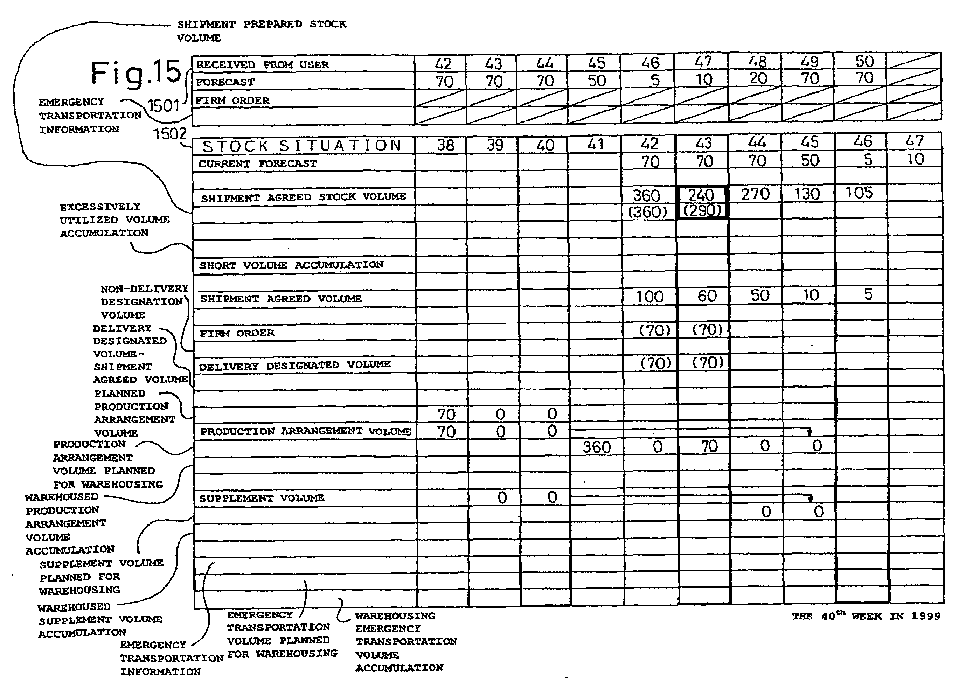

Fig. 15 indicates a point in the 40^{th} week, 1999, a week later than the state in Fig. 14. Here, as shown in 1501, it is understood that "FORECAST" data for the 42^{nd} week to the 50^{th} week has been received.

As of the 40^{th} week, what corresponds to the "DETERMINATION PERIOD" data (6 weeks later) is the 46^{th} week. Therefore, a "SHIPMENT AGREED VOLUME" data of 5 units and a "SHIPMENT AGREED STOCK VOLUME" data of 105 units for the 46^{th} week are obtained through calculation.

In addition, a "PLANNED PRODUCTION ARRANGEMENT VOLUME" data of 0 units for the 40^{th} week is obtained through calculation in accordance with the flow illustrated in Fig. 6. Namely, since this system is initiated in the 36^{th} week, "a"=36, and in the 40^{th} week, "n"=5. Therefore, the "PLANNED PRODUCTION ARRANGEMENT VOLUME" data for the 40^{th} week = 100(the "SHIPMENT AGREED VOLUME" data for the 42^{nd} week) + 60(the "SHIPMENT AGREED VOLUME" data for the 43^{rd} week) + 50(the "SHIPMENT AGREED VOLUME" data for the 44^{th} week) + 10(the "SHIPMENT AGREED VOLUME" data for the 45^{th} week) + 5(the "SHIPMENT AGREED VOLUME" data for the 46^{th} week, which is to be determined in the 46^{th} week) + 10(the "FORECAST" data for the 47^{th} week) + 20(the "FORECAST" data for the 48^{th} week) + 70(the "FORECAST" data for the 49^{th} week) - 360(the "PRODUCTION ARRANGEMENT VOLUME" data for the 36^{th} week) - 0(the "PRODUCTION ARRANGEMENT VOLUME" data for the 37^{th} week) - 70(the "PRODUCTION ARRANGEMENT VOLUME" data for the 38^{th} week) - 0(the "PRODUCTION ARRANGEMENT VOLUME" data for the 39^{th} week) = -105 units. Since the value is negative, the "PLANNED PRODUCTION ARRANGEMENT VOLUME" for the 40^{th} week is 0 units. Furthermore, since the "EXCESSIVELY UTILIZED VOLUME ACCUMULATION" data is 0 units, the "PRODUCTION ARRANGEMENT VOLUME" data for the 40^{th} week is 0 units from the "PRODUCTION ARRANGEMENT VOLUME" data = the "PLANNED PRODUCTION ARRANGEMENT VOLUME" data.

Furthermore, a "PRODUCTION ARRANGEMENT VOLUME PLANNED FOR WAREHOUSING" data of 0 units for the 45^{th} week can be obtained through a calculation in accordance with the flow illustrated in Fig. 6.

Furthermore, since the 42^{nd} week and the 43^{rd} week are 3 weeks later and fall within the "PREDETERMINED PERIOD" data, the "SHIPMENT PREPARED STOCK VOLUME" (360) units and the "SHIPMENT PREPARED STOCK VOLUME" (290) units for the 42^{nd} week and the 43^{rd} week, respectively, can be obtained through calculations in accordance with the flow illustrated in Fig. 7. Here, since the "SHIPMENT PREPARED STOCK VOLUME" (290) is obtained from the "PRODUCTION ARRANGEMENT VOLUME PLANNED FOR WAREHOUSING" 360 units for the 41^{st} week and the "FORECAST" 70 units for the 42^{nd} week using an expression (360-70=290)

Furthermore, the "SUPPLEMENT VOLUME" data of 0 unit for the 40^{th} week and the "supplement volume planned for warehousing" data of 0 unit for the 45^{th} week are obtained through calculations from a difference between the "SHIPMENT AGREED STOCK VOLUME" data and the "SHIPMENT PREPARED STOCK VOLUME" data for the 43^{rd} week.

In addition, as of the 39^{th} week, since conditions for the activation of the flows illustrated in Figs. 8 to 10 are not met, the "EXCESSIVELY UTILIZED VOLUME ACCUMULATION" data, the "EMERGENCY TRANSPORTATION VOLUME PLANNED FOR WAREHOUSING" data and the "SHORT VOLUME ACCUMULATION" data cannot be obtained through calculation. In addition, the delivery status screen 1102 created as described above is transmitted to the user side server 20.

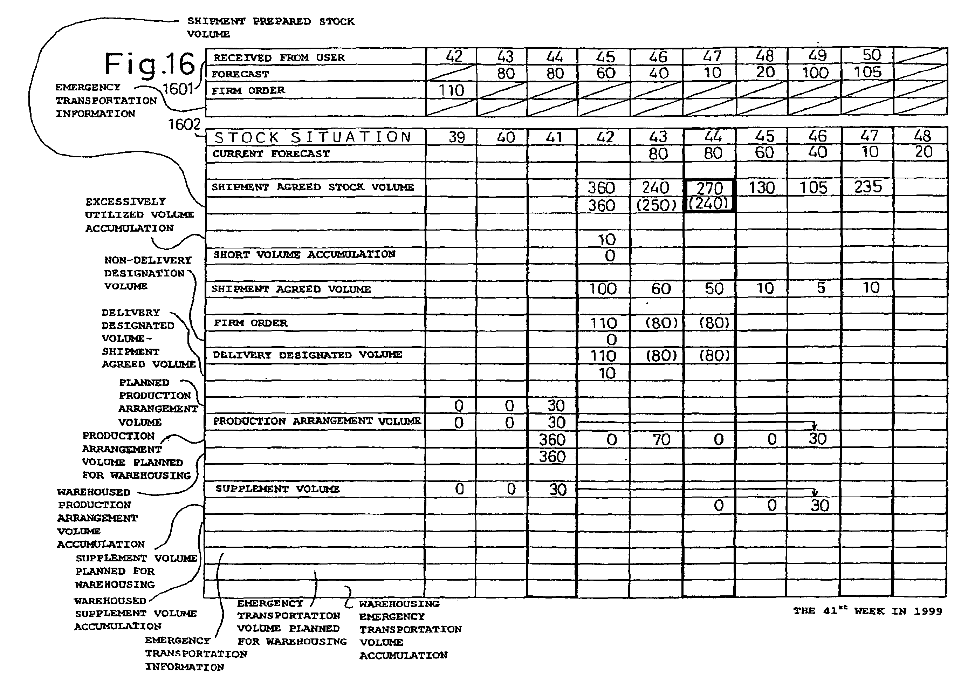

Fig. 16 indicates a point in the 41^{st} week in 1999, a week later than the state in Fig. 15. Here, as shown in 1601, it is understood that "FORECAST" data for the 43^{rd} week to the 50^{th} week and the "FIRM ORDER" data for the 43^{rd} week in 1999 have been received. In addition, as shown in 1601, the "EMERGENCY TRANSPORTATION INFORMATION" data for the 43^{rd} week in 1999 has not been received. Additionally, as is shown in the row of "DELIVERY DESIGNATION VOLUME" data, it is understood that there has been given a designation that 110 units of parts are to be delivered to the user in the 42^{nd} week. Moreover, referring to the row of the "WAREHOUSED PRODUCTION ARRANGEMENT VOLUME ACCUMULATION" data, it is understood that 360 units of parts have actually been warehoused at the stock point.

As of the 41^{st} week, what corresponds to the "DETERMINATION PERIOD" data (6 weeks ahead) is the 47^{th} week. Therefore, a "SHIPMENT AGREED VOLUME" data of 10 units and a "SHIPMENT AGREED STOCK VOLUME" data of 235 units for the 47^{th} week are obtained through calculation.

In addition, a "PLANNED PRODUCTION ARRANGEMENT VOLUME" of 30 units for the 41^{st} week is obtained through calculation in accordance with the flow illustrated in Fig. 6. Namely, since this system is initiated in the 36^{th} week, "a"=36, and in the 41^{st} week, "n"=6.
Therefore, the "PLANNED PRODUCTION ARRANGEMENT VOLUME"
data for the 41^{st} week = 100(the "SHIPMENT AGREED VOLUME"
data for the 42^{nd} week) + 60(the "SHIPMENT AGREED VOLUME"
data for the 43^{rd} week) + 50(the "SHIPMENT AGREED VOLUME"
data for the 44^{th} week) + 10(the "SHIPMENT AGREED VOLUME"
data for the 45^{th} week) + 5(the "SHIPMENT AGREED VOLUME"
data for the 46^{th} week) + 10(the "SHIPMENT AGREED VOLUME"
data for the 47^{th} week, which is to be determined in the 41^{st} week) + 20(the "FORECAST" data for the 48^{th} week) + 100(the "FORECAST" data for the 49^{th} week) + 105(the "FORECAST" data for the 50^{th} week) - 360(the "PRODUCTION ARRANGEMENT VOLUME" data for the 36^{th} week) - 0(the "PRODUCTION ARRANGEMENT VOLUME" data for the 37^{th} week) - 70(the "PRODUCTION ARRANGEMENT VOLUME" data for the 38^{th} week) - 0(the "PRODUCTION ARRANGEMENT VOLUME" data for the 39^{th} week) - 0(the "PRODUCTION ARRANGEMENT VOLUME" data for the 40^{th} week) = 30 units. Furthermore, since the "EXCESSIVELY UTILIZED VOLUME ACCUMULATION" data is positive, the "PRODUCTION ARRANGEMENT VOLUME" data for the 41^{st} week is 30 units from the "PRODUCTION ARRANGEMENT VOLUME" data = the "PLANNED PRODUCTION ARRANGEMENT VOLUME" data.

Furthermore, since the 42^{nd} week to the 44^{th} week are 3 weeks later and fall within the "PREDETERMINED PERIOD" data, 360 units, (250) units and (240) units are obtained through calculation as the "SHIPMENT PREPARED STOCK VOLUME" data for the week 42^{nd} to the 44^{th} week, respectively. The "SHIPMENT PREPARED STOCK VOLUME" (250) units for the 43^{rd} week is obtained by subtracting 110 units of "DELIVERY DESIGNATION" data from 360 units which have been actually warehoused at the stock point using the formula (360-110=250). In addition, the "SHIPMENT PREPARED STOCK VOLUME" (240) units for the 44^{th} week is obtained from the "SHIPMENT PREPARED STOCK VOLUME" (250 units) for the 49^{th} week assuming that the "FORECAST" data of 80 units for the 43^{rd} week has been delivered and that the "PRODUCTION ARRANGEMENT VOLUME PLANNED FOR WAREHOUSING" data of 70 units for the 43^{rd} week has been warehoused using a formula of (110 - 100=10).

Furthermore, when the "SHIPMENT AGREED STOCK VOLUME" data of 270 units for the 44^{th} week is compared with the "SHIPMENT AGREED STOCK VOLUME" (240) units in accordance with the flow illustrated in Fig. 7, the "SHIPMENT PREPARED STOCK VOLUME" data is short by 30 units, and therefore the "SUPPLEMENT VOLUME" data of 30 units and the "PRODUCTION ARRANGEMENT VOLUME PLANNED FOR WAREHOUSING" data of 30 units are obtained through calculation.

Moreover, the "EXCESSIVELY UTILIZED VOLUME ACCUMULATION" data of 10 units is obtained from the "FIRM ORDER" data - the "SHIPMENT AGREED VOLUME" data (110-100=10) in accordance with the flow illustrated in Fig. 8. In addition, since "SHIPMENT PREPARED STOCK VOLUME" data - "FIRM ORDER" data does not become negative in the 42^{nd} week, no alarm is displayed.

Furthermore, the "SHORT VOLUME ACCUMULATION" data of 0 unit ((360-360) + (0-0)=0) for the 42^{nd} week is obtained through calculations through ("PRODUCTION ARRANGEMENT VOLUME PLANNED FOR WAREHOUSING" data - "WAREHOUSED PRODUCTION ARRANGEMENT VOLUME ACCUMULATION" data) + ("SUPPLEMENT VOLUME PLANNED FOR WAREHOUSING" data - "WAREHOUSED SUPPLEMENT VOLUME ACCUMULATION" data) in accordance with the flow shown in Fig. 9.

In addition, as of the 42^{nd} week, since no "EMERGENCY TRANSPORTATION INFORMATION" data has been received, the flow in Fig. 10 is not activated, and the "EMERGENCY TRANSPORTATION VOLUME PLANNED FOR WAREHOUSING" data is not calculated. In addition, the delivery status screen 1602 created as described above is transmitted to the user side server 20.

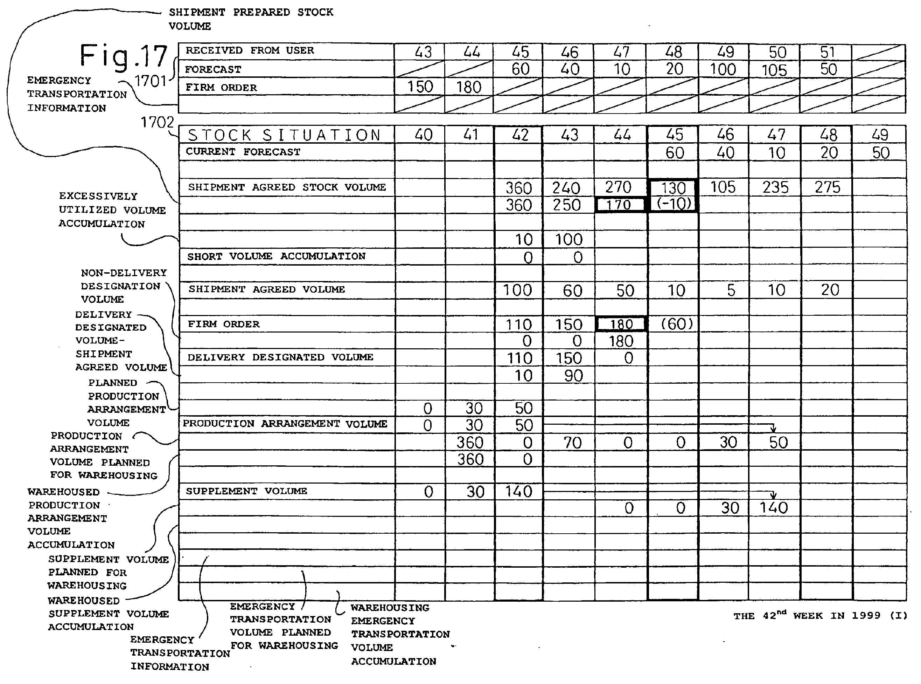

Fig. 17 indicates a point in the 42^{nd} week in 1999, a week later than the state in Fig. 16. Here, as shown in 1701, it is understood that "FORECAST" data for the 45^{th} week to the 50^{th} week in 1999 and the "FIRM ORDER" data for the 43^{rd} week and 44^{th} week in 1999 have been received. In addition, as shown in 1701, the "EMERGENCY TRANSPORTATION INFORMATION" data has not been received at this point in time. Additionally, looking at the row of "DELIVERY DESIGNATION VOLUME" data, it is understood that there has been given another designation that 150 units of parts are to be delivered in the 43^{rd} week.

As of the 42^{nd} week, what corresponds to the "DETERMINATION PERIOD" data (6 weeks later) is the 48^{th} week. Therefore, a "SHIPMENT AGREED VOLUME" data of 20 units and a "SHIPMENT AGREED STOCK VOLUME" data of 275 units for the 48^{th} week are obtained through calculations.

In addition, a "PLANNED PRODUCTION ARRANGEMENT VOLUME" data of 50 units for the 42^{nd} week is obtained through a calculation in accordance with the flow illustrated in Fig. 6. Namely, since this system is initiated in the 36^{th} week, "a"=36, and in the 42^{nd} week, "n"=7. Therefore, the "PLANNED PRODUCTION ARRANGEMENT VOLUME" data for the 42^{nd} week = 100(the "SHIPMENT AGREED VOLUME" data for the 42^{nd} week) + 60(the "SHIPMENT AGREED VOLUME" data for the 43^{rd} week) + 50(the "SHIPMENT AGREED VOLUME" data for the 44^{th} week) + 10(the "SHIPMENT AGREED VOLUME" data for the 45^{th} week) + 5(the "SHIPMENT AGREED VOLUME" data for the 46^{th} week) + 10(the "SHIPMENT AGREED VOLUME" data for the 47^{th} week + 20(the "SHIPMENT AGREED VOLUME" data for the 48^{th} week, which is determined in the 42^{nd} week) + 100(the "FORECAST" data for the 49^{th} week) + 105(the "FORECAST" data for the 50^{th} week) + 50(the "FORECAST" data for the 51^{st} week) - 360(the "PRODUCTION ARRANGEMENT VOLUME" data for the 36^{th} week) - 0(the "PRODUCTION ARRANGEMENT VOLUME" data for the 37^{th} week) - 70(the "PRODUCTION ARRANGEMENT VOLUME" data for the 38^{th} week) - 0(the "PRODUCTION ARRANGEMENT VOLUME" data for the 39^{th} week) - 0(the "PRODUCTION ARRANGEMENT VOLUME" data for the 40^{th} week) - 30(the "PRODUCTION ARRANGEMENT VOLUME" data for the 41^{st} week) = 50 units. Furthermore, since the "EXCESSIVELY UTILIZED VOLUME ACCUMULATION" data is positive, the "PRODUCTION ARRANGEMENT VOLUME" data for the 42^{nd} week is 50 units from the "PRODUCTION ARRANGEMENT VOLUME" data = the "PLANNED PRODUCTION ARRANGEMENT VOLUME" data.

Furthermore, since the 42^{nd} week to the 45^{th} week are 3 weeks later and fall within the "predetermined period" data, 360 units, 250 units, 170 units and (-10) units are obtained through calculations as the "SHIPMENT PREPARED STOCK VOLUME" data for the week 42^{nd} to the 45^{th} week, respectively.

Furthermore, when the "SHIPMENT AGREED STOCK VOLUME" data of 130 units for the 45^{th} week is compared with the "SHIPMENT PREPARED STOCK VOLUME" (-10) units in accordance with the flow illustrated in Fig. 7, the "SHIPMENT PREPARED STOCK VOLUME" data is short by 140 units, and therefore the "SUPPLEMENT VOLUME" data of 140 units for the 42^{nd} week and the "SUPPLEMENT VOLUME PLANNED FOR WAREHOUSING" data of 140 units for the 47^{th} week are obtained through calculations.

Moreover, the "EXCESSIVELY UTILIZED VOLUME ACCUMULATION" data of 100 units is obtained by adding 90 units (150-60=90) for the 43^{rd} week to 10 units for the 42^{nd} week in accordance with the flow illustrated in Fig. 8. In addition, since "SHIPMENT PREPARED STOCK VOLUME" data - "FIRM ORDER" data becomes negative (170-180=-10)in the 44^{th} week, an alarm such as a flashing indicator is displayed in the respective rows.

Furthermore, the "SHORT VOLUME ACCUMULATION" data of 0 unit for the 43^{rd} week is obtained through calculations by adding 0 unit for the 42^{nd} week to 0 unit for the 41^{st} week in accordance with the flow shown in Fig. 9.

In addition, as of the 42^{nd} week, since no "EMERGENCY TRANSPORTATION INFORMATION" data has been received, the flow in Fig. 10 is not activated, and the "EMERGENCY TRANSPORTATION VOLUME PLANNED FOR WAREHOUSING" data is not calculated. In addition, the delivery status screen 1702 created as described above is transmitted to the user side server 20.

Looking into the situation shown in Fig. 17, as the volume of parts (180 units) that is required to be delivered by the user is larger than the volume of parts (170 units) that can be prepared at the stock point in the 44^{th} week, the "FIRM ORDER" data cannot be fulfilled. Here, the reason why this situation is caused is considered from the "EXCESSIVELY UTILIZED VOLUME ACCUMULATION" data and the "SHORT VOLUME ACCUMULATION" data. Firstly, the "EXCESSIVELY UTILIZED VOLUME ACCUMULATION" data in the 43^{rd} week is 100 units, and it is understood that the "FIRM ORDER" data largely exceeds the "SHIPMENT AGREED VOLUME" data based on the "FORECAST" data received from the user. On the contrary, the "SHORT VOLUME ACCUMULATION" data in the 43^{rd} week is 0 units, and it is understood from this that the supplier ensures that a volume of parts matching the "PRODUCTION ARRANGEMENT VOLUME" data and the "SUPPLEMENT VOLUME" data is warehoused at the stock point. Consequently, it is clear that the user is responsible for the situation in which the "SHIPMENT PREPARED STOCK VOLUME" data cannot match the "FIRM ORDER" data.

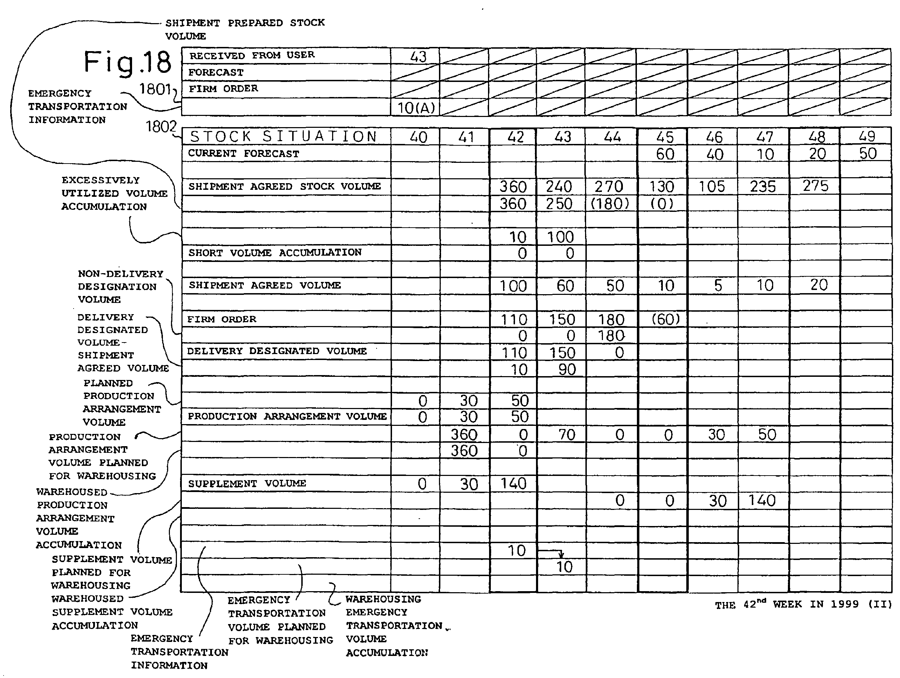

Similarly to Fig. 17, Fig. 18 indicates the 42^{nd} week in 1999 as the current point in time. However, Fig. 18 represents a situation where the user, who indicated the delivery status screen indicated by 1707 in Fig. 17 on the display unit 21, transmits the "EMERGENCY TRANSPORTATION INFORMATION" data such as indicated by 1801.

When the supplier side server 10 receives the "EMERGENCY TRANSPORTATION INFORMATION" data, the "EMERGENCY TRANSPORTATION VOLUME PLANNED FOR WAREHOUSING" data of 10 units for the 43^{rd} week is obtained through a calculation. This results from the fact that, as the "TRANSPORTATION METHOD" data of the "EMERGENCY TRANSPORTATION INFORMATION" data for the 42^{nd} week is data corresponding to shipment by air, the "REQUIRED PERIOD" data is 1 week. In addition, it should be noted that the addition of the "EMERGENCY TRANSPORTATION VOLUME PLANNED FOR WAREHOUSING" data of 10 units for the 43^{rd} week has changed the "SHIPMENT PREPARED STOCK VOLUME" data for and after the 44^{th} week.

Thus, the delivery status screen indicated by 1801 in Fig. 18 is created for transmission to the user side server 20.

In addition, what is important in Fig. 18 is the cost for the shipment of 10 units by air to the stock point. Normally, it takes 3 weeks to ship parts from the supplier to the stock point by sea. Moreover, the transportation cost by sea is included in prices of parts in advance. Here, the question is who pays for the cost incurred due to the shipment by air. In the past, judging from the difference in status of the supplier and the user, it is usual that the supplier pays for the extra cost. However, with the system according to the present invention being used, the cause of the emergency transportation becomes clear. As has been mentioned, the user is considered to be responsible for the occurrence of the emergency transportation.

Note that the delivery status screens used in Figs. 11 to 18 are examples and they may be modified variously. For example, in the aforesaid examples, data of various types is calculated on a weekly basis to create the delivery status screens, but the data processing may be changed to a daily or monthly basis. In addition, preferably, the system is used for electronic parts supply management, but the system may be applied to supply management of parts other than electronic parts.

## Claims

1. A data processing method, for a parts supply management system having a supplier side sever and a user side server which are both connected accessibly to a network, comprises the steps of:
in said supplier side server,
transmitting parts utilization forecast information and order information from said user side server via said network;
storing said parts utilization forecast information and said order information;
obtaining production arrangement information based on said parts utilization forecast information, said production arrangement information being used to initiate arrangements for production of parts and transportation of parts;
obtaining stock forecast information based on said parts utilization forecast information or said order information; and
obtaining supplement information based on said parts utilization forecast information and said stock forecast information, said supplement information being used to initiate supplement of parts and transportation of parts.

2. The data processing method of claim 1, wherein said supplier side sever produces a display screen including said production arrangement information, said stock forecast information and said supplement information, and
transmits said display screen to said user side sever.

3. The data processing method of claim 1, wherein said production arrangement information is determined based on said parts utilization forecast information for a first period which is equal to or longer than a required period for supplying parts from the supplier to the user.

4. The data processing method of claim 1, wherein said supplement information is determined based on said parts utilization forecast information and said stock forecast information for a second period which is shorter than said first period.

5. The data processing method of claim 2, wherein said supplier side sever compares said order information with said stock forecast information and issues an alarm on said display screen in case a volume indicated in said stock forecast information does not reach a volume indicated in said order information.

6. The data processing method of claim 2, wherein said supplier side server obtains delivery agreed volume information corresponding to a parts volume which the supplier agrees to deliver to the user based on said parts utilization forecast information and stock agreed volume information corresponding to a parts volume which the supplier agrees to keep as a stock for the user and displays said delivery agreed volume information and said stock agreed volume information on said display screen.

7. The data processing method of claim 6, wherein said supplier side server obtains excessively utilized volume information representing an order status on the user side based on said delivery agreed volume information and said order information and displays said excessively utilized volume information on said display screen.

8. The data processing method of claim 2, wherein said supplier side server obtains information representing a parts supply status on the supplier side based on said production arrangement information and said supplement information and displays said information on said display screen.

9. The data processing method of claim 1, wherein said supplier side server receives emergency transportation information transmitted from said user side server via said network and modifies said stock forecast information based on said emergency transportation information.

10. The data processing method of claim 9, wherein said emergency transportation information includes information on a transportation method.

11. The data processing method of claim 1, wherein said supplier side server transmits said production arrangement information, said stock forecast information and said supplement information to said user side server via said network in order to produce a display screen.

12. The data processing method of claim 11, wherein said supplier side server obtains delivery agreed volume information corresponding to a parts volume which the supplier agrees to deliver to the user based on said parts utilization forecast information and stock agreed volume information corresponding to a parts volume which the supplier agrees to keep as a stock for the user and transmits said delivery agreed volume information and stock agreed volume information to said user side server via said network.

13. The data processing method of claim 11, wherein said supplier side server obtains information representing a parts supply status on said supplier side based on said production arrangement information and said supplement information and transmits said information, so obtained, to said user side server via said network.

14. The data processing method of claim 11, wherein said supplier side server obtains information representing a parts supply status on the supplier side based on said production arrangement information and said supplement information and transmits said information, so obtained, to said user side server via said network.

15. The data processing method of claim 11, wherein said supplier side server receives emergency transportation information transmitted from said user side server via said network and modifies said stock forecast information based on said emergency transportation information.

16. The data processing method of claim 15, wherein said emergency transportation information includes information on a transportation method.
